**Europäisches Patentamt**

**European Patent Office**

**Office européen des brevets**

(19)

(11) Publication number: **0 535 969 B1**

# EUROPEAN PATENT SPECIFICATION

(45) Date of publication of patent specification: **22.11.95**

(51) Int. Cl.⁶: **B60C 9/22**, B60C 9/08, D02G 3/48

(21) Application number: **92308993.2**

(22) Date of filing: **01.10.92**

(54) **A pneumatic tyre.**

(30) Priority: **04.10.91 JP 285617/91**

(43) Date of publication of application:
**07.04.93 Bulletin 93/14**

(45) Publication of the grant of the patent:
**22.11.95 Bulletin 95/47**

(84) Designated Contracting States:
**DE FR GB**

(56) References cited:
**EP-A- 0 329 594**
**EP-A- 0 335 588**
**EP-A- 0 455 453**
**DE-A- 3 535 064**
**GB-A- 2 003 525**

(73) Proprietor: **SUMITOMO RUBBER INDUSTRIES LIMITED**
**1-1 Tsutsuicho 1-chome**
**Chuo-ku**
**Kobe-shi**
**Hyogo-ken (JP)**

(72) Inventor: **Nakasaki, Eiji**
**629 Kimura,**
**Kakogawa-sho**
**Kakogawa-shi,**
**Hyogo-ken (JP)**

(74) Representative: **Stewart, Charles Geoffrey**
**SP TYRES UK LIMITED**
**Technical Division**
**Fort Dunlop,**
**Erdington,**
**Birmingham B24 9OT (GB)**

EP 0 535 969 B1

**Description**

The present invention relates to a pneumatic tyre that reduces bump impact from bumpy or unpaved roads to improve the ride comfort and which can have reduced in weight as well as rolling resistance.

Conventionally, four-wheel vehicles and particularly small trucks, have been improved principally in relation to useful load and extending their life. With a tyre as well, it has been required to increase the strength and rigidity to further improve their durability, and so steel cords with a higher strength and rigidity have been employed in the belt layers.

Such a tyre has an improved strength and wear resistance, but the problem of inferior ride comfort.

Recently, however, due to aging of truck drivers, an improvement in ride comfort has been demanded for long distance driving, specifically in bump impact when riding over gaps on a concrete road and driving along a gravel road.

On the other hand, to promote energy-saving in vehicles, reduction of weight and decrease of rolling resistance are strongly demanded in tyres as well.

A tyre according to the preamble of claim 1 is known from EP-A-0 335 588

It is hence a primary object of the invention to provide a pneumatic tyre that is reduced in weight and improved in ride comfort against bump impact to meet the requirements as described.

According to one aspect of the present invention a pneumatic tyre comprises a carcass extending from a tread through sidewalls to a bead core in each of two beads and turned up around a bead core, a belt layer disposed outside, in the tyre radial direction, of the carcass and in the tread part, and a band layer disposed outside in the tyre radial direction, of the belt layer, characterised in that the said carcass comprises at least one carcass ply of hybrid cords comprising a twisted high elasticity filament and low elasticity filament, said band layer comprises at least one band ply composed of a spirally wound narrow band-shaped ply strip having at least one band cord embedded in a topping rubber and wound at a small angle to the tyre equator, and the width of the band layer in the tyre axial direction is 0.3 to 0.5 times the width of the belt layer centring about the tyre equator.

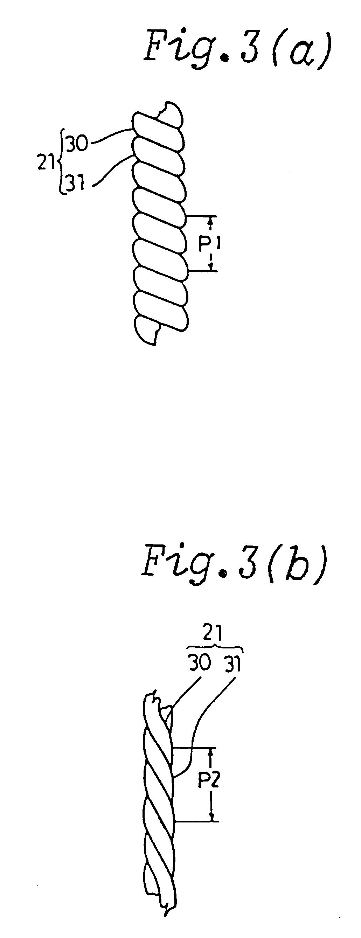

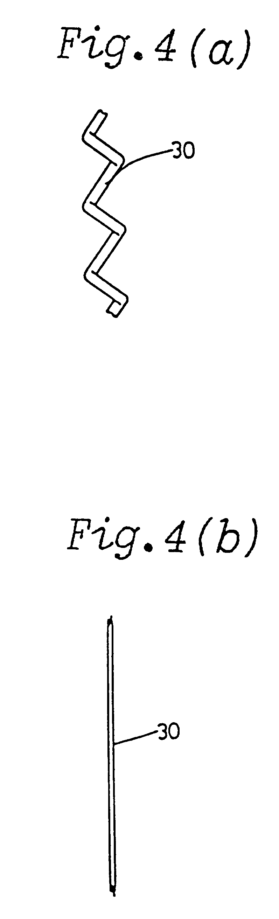

The carcass is composed of hybrid cords of twisted high elasticity filaments and low elasticity filaments. Such hybrid cord, when exposed to a tensile force, expands from a state shown in Fig. 3 (a) as its twist loosens as shown in Fig. 3 (b). As schematically shown in Figs. 4 (a) and (b), the high elasticity filament, exhibiting initially a coiled shape, is straightened like a filament. From this state, it demonstrates its inherent high elasticity.

Therefore, by employing such a carcass having hybrid cords of the structure in a pneumatic tyre, the tyre acts with a low elasticity on a flat road such as a paved road or when the load is light, thereby improving the ride comfort and alleviating the driver's fatigue, while exhibiting a high elasticity when running on a very bumpy road such as a gravel road and concrete-paved road having joints and running with a full load, thereby converging early against a high bump impact.

Thus, by employing such hybrid cords in a carcass, it is possible to have a tyre with the two functions as described above to reduce the driver's fatigue in a long-distance drive as well as to maintain ride comfort against bump impact.

Also, as the band layer is composed of a spirally wound narrow band-shaped ply strip having a band cord embedded in a topping rubber and wound at a small angle to the tyre equator C, the band cord continuously extends in the circumferential direction of the tyre and create no seams, which further improves the ride comfort.

In addition, the width in the tyre axial direction of the band layer is 0.3 to 0.5 times the width of the belt layer centring about the tyre equator C.

If the width is less than 0.3 times, as the ground-contact surface cannot be covered entirely, the ride comfort deteriorates, and, as the belt layer is insufficiently reinforced, the tread part is insufficient in rigidity and durability. To the contrary, if it exceeds 0.5 times, the weight of the tread increases and the rolling resistance becomes too large.

Thus, in the invention, by combining and integrating the components described above, the ride comfort is improved and the weight is reduced.

When aromatic polyamide fibres are used in the belt layer, as the aromatic polyamide fibres have a high tensile strength, the belt layer can be formed by only two belt plies to achieve a further weight reduction.

An embodiment of the present invention will now be described by way of example, referring to the attached drawings, in which:

Fig. 1 is a sectional view showing an embodiment of the invention;

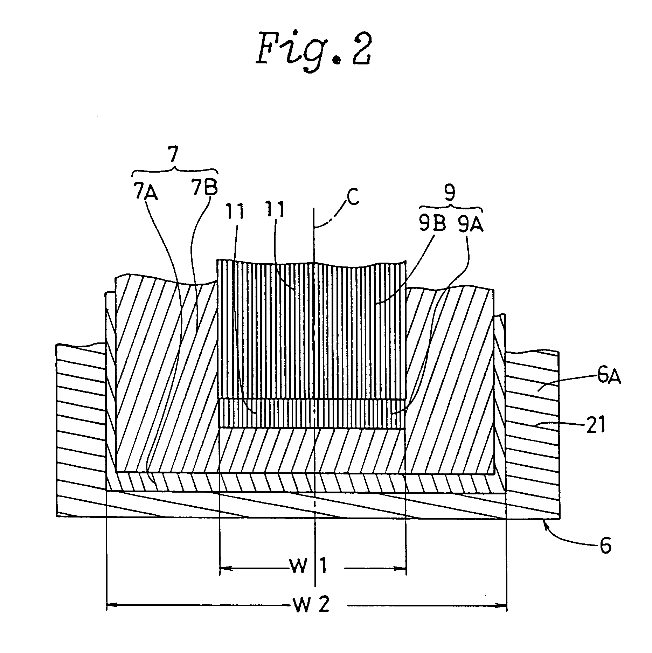

Fig. 2 is a developed plan view showing plies of a carcass, a belt layer and a band layer;

2

Fig. 3 (a) and (b) are front views showing an example of a hybrid cord.

Fig. 4 (a) and (b) are front views showing the elongation of a high elasticity filament.

Fig. 5 is a diagram showing the elongation of a hybrid cord.

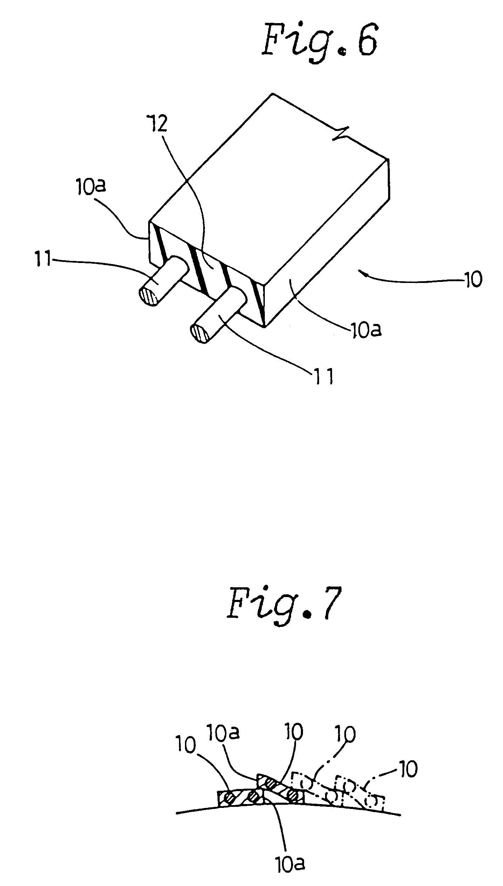

Fig. 6 is a perspective view showing an example of a band-shaped ply strip.

Fig. 7 is a sectional view showing the winding of a band-shaped ply strip.

A pneumatic tyre 1 comprises a tread 2, two sidewalls 3 each extending inwardly in the tyre radial direction from both ends of the tread 2 and two beads 4 one located at the inward end of each sidewall 3 and reinforced by a bead core 5. The pneumatic tyre 1 also comprises a carcass 6 extending from the tread 2 through the sidewalls 3 and turned up around the bead core 5 from inside to outside in the tyre axial direction, a belt layer 7 disposed outside, in the tyre radial direction, of the carcass 6 and in the tread 2, and a band layer 9 disposed radially outside the belt layer 7 centring about the tyre equator C. A bead apex 8 having a triangular sectional shape is provided radially outside of the bead core 5, and a chafer 14 is provided in the bead 4 so as to cover the outer surface of the bead 4 to prevent rim displacement.

The carcass 6 comprises at least one carcass ply, one carcass ply 6A in the embodiment, having carcass cords 21 inclined at an angle of 70 to 90 deg. to the tyre equator C.

The carcass cord 21 is formed, as shown in Fig. 3 (a), by twisting together a high elasticity filament 30 and a low elasticity filament 31.

The high elasticity filament 30 is composed of organic fibre having an elastic modulus of more than 1000 $kg/mm^2$, preferably 1500 $kg/mm^2$, such as aromatic polyamide fibre, aromatic polyester fibre, polyvinyl alcohol fibre or carbon fibre having a strength of more than 15 gm/denier. As for the thickness, an aromatic polyamide fibre having a comparatively small diameter of 1000 to 3000 deniers is preferably used.

The low elasticity filament 31 is composed of organic fibre having an elastic modulus of less than 1000 $kg/mm^2$, such as nylon fibre, polyester fibre or vinylon fibre. A nylon fibre having an elastic modulus of less than 700 $kg/mm^2$ is preferably used.

Such a high elastic filament 30, whether in a singularity or in a plurality, is pre-twisted, and is twisted together in the reverse direction with one or more low elasticity filaments 31 pre-twisted in the same direction, thereby forming the hybrid cord 21. Meanwhile, when using a plurality of high elasticity filaments 30 and low elasticity filaments 31, each filament may be pre-twisted, or the plurality may be pre-twisted together. The hybrid cord 21 may be formed, as shown in Fig. 3(a), by twisting together each one of the high elasticity filament 30 and low elasticity filament 31, or twisting one of either filament type and a plurality of the other.

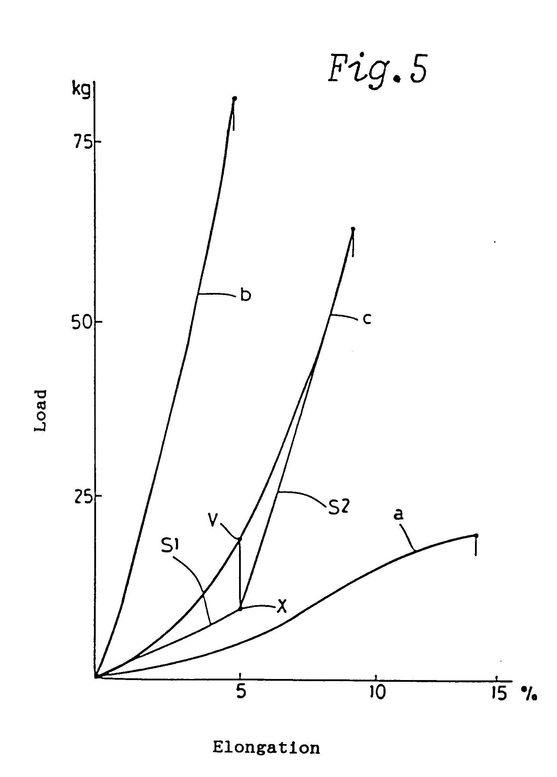

When a tensile force is applied to the hybrid cord 21, as shown in Fig. 3 (b), it is elongated while straightening the twist. When stretched, the initial twisting pitch P1 of the hybrid cord 21 is increased to pitch P2. This elongation is schematically shown in Figs. 4 (a),(b) with respect to the high elasticity filament 30, in which the high elasticity filament 30A in a coil form in the initial state becomes a straight filament 30B due to the specified elongation. In this state, therefore, the high elasticity filament 30 then exhibits its own intrinsic high elasticity. Thus, by preliminarily twisting the high elasticity filament 30 spirally, it is evident to produce the low elasticity region of a relatively large elongation from the spiral state in Fig. 4 (a) till the straight state in Fig. 4 (b), and the high elasticity region of small elongation when a further load is added to the state in Fig. 4 (b), and the straight state shown in Fig. 4 (b) forms a knee point V in the elongation/stress curve of Fig. 5. The knee point is where there is a second order discontinuity in the curve.

In the hybrid cord 21, the knee point V is set within 2 to 7% elongation. As the hybrid cord 21 is a twisted assembly of a high elasticity filament 30 and a low elasticity filament 31, and therefore as shown in Fig.3 (b), the high elasticity filament 30 and low elasticity filament 31 are twisted even when a load is applied, and the knee point V is not so obvious as compared with the schematic case in Figs. 4 (a) and (b). An example of a stress-elongation curve of the hybrid cord 21 is shown in Fig. 5. In the diagram, curve (a) denotes the elongation curve of a low elasticity filament 31 of nylon of 1260d, and curve (b) is that of a high elasticity filament 30 made of aromatic polyamide of 1500d. Curve (c) is the hybrid cord 21 twisted from two high elasticity filaments 30 and one low elasticity filament 31. The curve (c) is located between the curves (a) and (b), and the knee point V is found within a range of 2 to 7% elongation.

In the hybrid cord 21, the knee point V is defined as the intersecting point of curve (a) and the perpendicular which passes through the cross point X of the tangent S1 contacting with the curve in the state of zero elongation and the tangent S2 drawn to the curve (c) at the breakdown point.

The hybrid cord 21 has a high elasticity region ranging from the knee point V to the breakdown point, and a low elasticity region ranging from the origin at zero elongation to the knee point V, wherein the ratio EH/EL of the elasticity in the high elasticity region EH to the elasticity in the low elasticity region EL is in a range of 2 to 10. With such hybrid cord 21, by properly selecting the thickness, quantity and elasticity of the high elasticity filaments, and thickness, quantity and elasticity of the low elasticity filaments, and adjusting the twisting conditions such as filament angle, a hybrid cord 21 may be provided with the above range as shown in Fig. 7. The elongation of the high elasticity filament 30 may be controlled also by selecting the drawing treatment given the high or low elasticity filament 30, 31.

In the embodiment, the belt layer 7 is composed of two belt plies, a first belt ply 7A provided adjacent to the carcass 6 and a second belt ply 7B outside in the radial direction of the first belt ply 7A.

The first and second belt plies 7A and 7B comprise cut plies of belt cords aligned parallel at an angle of 5 to 40 degs. to the tyre's equator C, and each belt cord of the first and second belt plies 7A and 7B is oriented to intersect each other.

The belt cord is formed by using an aromatic polyamide fibre. The aromatic polyamide fibre is an organic fibre having a tensile strength approximately equal to that of steel, and, in addition, as it is lighter, the ply weight is reduced without reducing the strength comparing to a conventional belt ply using steel cords, which contributes to a weight reduction in the tyre.

The band layer 9 is composed of at least one band ply, two band plies 9A, 9B in the embodiment. The band plies 9A and 9B are formed by spirally winding long and narrow band-shaped ply strip 10 on the belt layer 7 at a small angle of 5 deg. or less to the tyre equator C.

The band-shaped ply strip 10 comprises one or plural, two in the embodiment, band cords 11 in parallel alignment embedded in a topping rubber 12, and the band cords 11 are made of low-elasticity nylon fibres in the embodiment.

Thus, by using nylon fibres for the band cords 11, the band-shaped ply strip 10 has an increased amount of elastic elongation, and, by winding it on the belt layer 7, the belt layer 7 is tightly held, thereby maintaining the rigidity of the tread part 2 by a cooperative action of the band layer 10 and belt layer 7.

In the embodiment, the inner and outer band plies 9A and 9B are of a same width W1, which is 0.3 to 0.5 times the width W2 of the belt layer 7. The inner band ply 9A is spirally wound on the outer circumference of the belt ply 7 from one of the band ends P on the side of one tread edge E1 beyond the tyre equator C to the other band end Q on the side of the other tread edge E2. The outer band ply 9B is wound toward one band end P from the other band end Q. In the embodiment, the band-shaped ply strip 10 is wound, as shown in Fig. 7, in such a manner that one side edge 10a overlaps near the opposite side end 10a when wound, thereby preventing the band-shaped ply strip 10 from loosening specifically at the band ends P and Q.

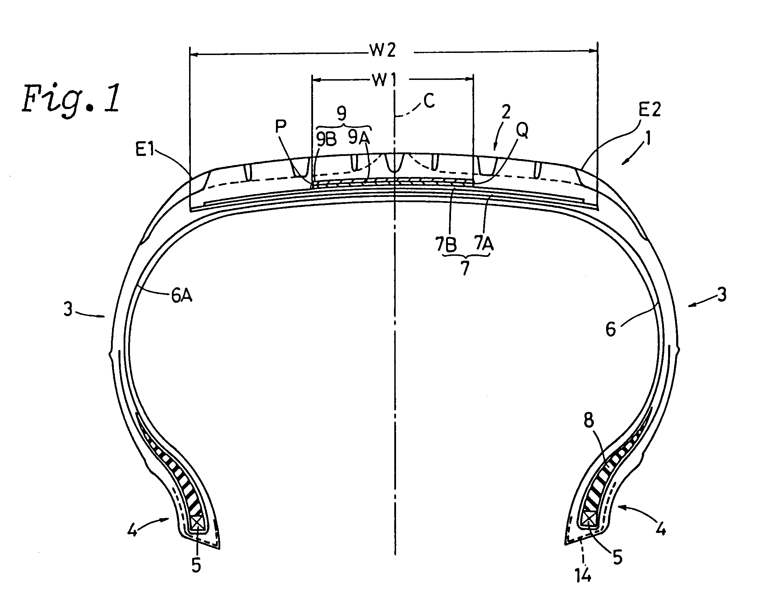

As examples of the invention tyres (embodiments 1 and 2) of size 195/60VR14, were made as shown in Fig. 1 and specified as shown in Table 1. These example tyres 1 and 2 were then tested. By way of comparison, a tyre of a conventional structure (comparison example) was similarly tested.

The test conditions were as follows:

1) Weight of tyre

The weight of tyre was measured, and the result was shown by an index, setting the index of the comparison example at 100.

The smaller number shows a lighter weight of tyre.

2) Rolling resistance

The tyres were measured by using a rolling resistance tester, and the result was shown by an index, setting the index of the comparison example at 100. The smaller number shows a smaller rolling resistance.

As a result of the tests, it was confirmed that the embodiments are lighter in weight and smaller in rolling resistance compared to the comparison example.

Table 1

| | | Embodiment 1 | Embodiment 2 | Comparison example |
|---|---|---|---|---|
| Carcass | · Number of plies | · 1 | · 1 | · 2 |
| | · Material of cord | · aromatic polyamide fiber · combined with nylon fiber | · aromatic polyamide fiber · combined with nylon fiber | · polyester fiber |
| Belt | · Structure of ply | · cut ply | · cut ply | · cut ply |
| | · Number of plies | · 2 | · 2 | · 2 |
| | · Material of cord | · aromatic polyamide fiber | · aromatic polyamide fiber | · steel cord |
| Band | · Structure of ply | · ply strip wound spirally | · ply strip wound spirally | — |
| | · Number of plies | · 2 | · 1 | — |
| | · Weight (Index) | · 86 | · 85 | · 100 |
| | · Rolling Resistance (Index) | · 90 | · 90 | · 100 |

## Claims

1. A pneumatic tyre comprising a carcass (6) extending from a tread (2) through sidewalls (3) to a bead core (5) in each of two beads (4) and turned up around a bead core (5), a belt layer (7) disposed

5

outside, in the tyre radial direction, of the carcass (6) and in the tread part (2), and a band layer (9) disposed outside in the tyre radial direction, of the belt layer (7), characterised in that the said carcass (6) comprises at least one carcass ply of hybrid cords (21) comprising a twisted high elasticity filament (30) and low elasticity filament (31), said band layer (9) comprises at least one band ply (9A or 9B) composed of a spirally wound narrow band-shaped ply strip (10) having at least one band cord embedded in a topping rubber and wound at a small angle to the tyre equator, and the width of the band layer (9) in the tyre axial direction is 0.3 to 0.5 times the width of the belt layer (7) centring about the tyre equator.

2. A pneumatic tyre according to claim 1, characterised in that the belt layer (7) comprises two belt plies (7A,7B) having belt cords of aromatic polyamide fibres.

3. A pneumatic tyre according to claim 1 or 2, characterised in that the high elasticity filament (30) is an organic fibre with elastic modulus of 1500 kg/mm$^2$ or more, and low elasticity filament (31) is an organic fibre with elastic modulus of 700 kg/mm$^2$ or less.

4. A pneumatic tyre according to claim 1,2 or 3 characterised in that the hybrid cord (21) is formed by twisting one or more high elasticity pretwisted filaments (30) and one or more low elasticity pretwisted filaments (31) and the pretwisted directions are the same to each other and reverse to the final twisting direction.

5. A pneumatic tyre according to any of claims 1 to 4, characterised in that in the stress/elongation curve (c) of the carcass cord, the hybrid cord (21) has a low elasticity region ranging from an origin (O) to a knee point (V) and a high elasticity region beyond the knee point (V), the elongation at said knee point (V) being within 2 to 7 %, and a ratio (EH/EL) of modulus of elasticity in the high elasticity region (EH) to the modulus of elasticity in the low elasticity region (EL) being in the range of 2 to 10.

**Patentansprüche**

1. Ein Luftreifen mit einer Karkasse (6), welche sich von einer Lauffläche (2) durch Seitenwände (3) zu einem Wulstkern (5) in jedem von zwei Wülsten (4) erstreckt und um einen Wulstkern (5) herumgeschlagen ist, einer Gürtelschicht (7), welche in der Radialrichtung des Reifens außerhalb der Karkasse (6) und in dem Lauffächenteil (2) angeordnet ist, und einer Bandschicht (9), welche in der Radialrichtung des Reifens außerhalb der Gürtelschicht (7) angeordnet ist,
dadurch gekennzeichnet,
daß die Karkasse (6) wenigstens eine Karkassenlage aus Hybridcorden (21) mit einem verdrehten Hochelastizitätsfilament (30) und einem Niederelastizitätsfilament (31) umfaßt, wobei die Bandschicht (9) wenigstens eine Bandlage (9A oder 9B) umfaßt, welche aus einem spiralförmig gewickelten, schmalen, bandförmigen Lagenstreifen (10) mit wenigstens einem Bandcord besteht, welcher in einem Obergummi eingebettet und unter einem kleinen Winkel zum Reifenäquator gewickelt ist, und die Breite der Bandschicht (9) in der Axialrichtung des Reifens das 0,3- bis 0,5-fache der Breite der Gürtelschicht (7) beträgt, wobei sie um den Reifenäquator herum zentriert ist.

2. Ein Luftreifen nach Anspruch 1,
dadurch gekennzeichnet,
daß die Gürtelschicht (7) zwei Gürtellagen (7A, 7B) mit Gürtelcorden aus aromatischen Polyamidfasern umfaßt.

3. Ein Luftreifen nach Anspruch 1 oder 2,
dadurch gekennzeichnet,
daß das Hochelastizitätsfilament (30) eine organische Faser mit einem Elastizitätsmodul von 1500 kg/mm$^2$ oder mehr und das Niederelastizitätsfilament (31) eine organische Faser mit einem Elastizitätsmoudul von 700 kg/mm$^2$ oder weniger ist.

4. Ein Luftreifen nach Anspruch 1, 2 oder 3,
dadurch gekennzeichnet,
daß der Hybridcord (21) durch Verdrehen einer oder mehrerer vorverdrehter Hochelastizitätsfilamente (30) und einer oder mehrerer vorverdrehter Niederelastizitätsfilamente (31) gebildet ist und die vorver-

EP 0 535 969 B1

drehten Richtungen zueinander gleich und umgekehrt zur endgültigen Verdrehrichtung sind.

**5.** Ein Luftreifen nach einem der Ansprüche 1 bis 4,
dadurch gekennzeichnet,
daß in der Beanspruchungs-/Dehnungskurve (c) des Karkassencords der Hybridcord (21) einen Niederelastizitätsbereich, welcher sich von einem Ursprung (O) zu einem Kniepunkt (V) erstreckt, und einen Hochelastizitätsbereich über den Kniepunkt (V) hinaus aufweist, wobei die Dehnung am Kniepunkt (V) innerhalb 2 bis 7% liegt, und ein Verhältnis (EH/EL) des Elasitizitätsmoduls im Hochelastizitätsbereich (EH) zum Elasitizitätsmodul im Niederelastizitätsbereich (EL) im Bereich von 2 bis 10 liegt.

## Revendications

**1.** Pneumatique comprenant une carcasse (6) disposée à partir d'une bande de roulement (2) dans des flancs (3) jusqu'à une tringle (5) placée dans chacun de deux talons (4) et repliée autour d'une tringle (5), une nappe (7) de ceinture placée, dans la direction radiale du pneumatique, à l'extérieur de la carcasse (6) et dans la partie de bande de roulement (2), et une couche (9) de bandage disposée à l'extérieur de la couche (7) de ceinture dans la direction radiale du pneumatique, caractérisé en ce que la carcasse (6) comporte au moins une nappe de carcasse formée de câblés hybrides (21) comprenant un filament d'élasticité élevée (30) et un filament de faible élasticité (31) qui sont retordus, la couche (9) de bandage comporte au moins une nappe (9A ou 9B) de bandage composée d'un ruban (10) de nappe en forme de bandage étroit enroulé en spirale, ayant au moins un câblé de bandage enrobé dans un caoutchouc d'enrobage et enroulé avec un petit angle par rapport à l'équateur du pneumatique, et la largeur de la couche de bandage (9) dans la direction axiale du pneumatique est comprise entre 0,3 et 0,5 fois la largeur de la couche de ceinture (7), centrée par rapport à l'équateur du pneumatique.

**2.** Pneumatique selon la revendication 1, caractérisé en ce que la couche de ceinture (7) comporte deux nappes (7A, 7B) de ceinture ayant des câblés de ceinture formés de fibres de polyamide aromatique.

**3.** Pneumatique selon la revendication 1 ou 2, caractérisé en ce que le filament d'élasticité élevée (30) est formé de fibres organiques dont le module élastique est supérieur ou égal à $1,5.10^{10}$ Pa (1 500 kg/mm$^2$), et le filament de faible élasticité (31) est formé de fibres organiques de module élastique inférieur ou égal à $7.10^9$ Pa (700 kg/mm$^2$).

**4.** Pneumatique selon la revendication 1, 2 ou 3, caractérisé en ce que le câblé hybride (21) est formé par retordage d'un ou plusieurs filaments d'élasticité élevée (30) ayant subi un retordage préalable et d'un ou plusieurs filaments de faible élasticité (31) ayant subi un retordage préalable, les sens de retordage préalable étant les mêmes et étant inverses du sens de retordage final.

**5.** Pneumatique selon l'une quelconque des revendications 1 à 4, caractérisé en ce que, sur la courbe contrainte-allongement (c) du câblé de carcasse, le câblé hybride (21) présente une région de faible élasticité comprise entre une origine (O) et un coude (V), et une région d'élasticité élevée au-delà du coude (V), l'allongement au coude (V) étant compris entre 2 et 7 %, et le rapport (EH/EL) des modules d'élasticité dans la région d'élasticité élevée (EH) et dans la région de faible élasticité (EL) étant compris entre 2 et 10.

7

Fig.1

EP 0 535 969 B1

# Fig.2

Fig.3(a)

Fig.3(b)

## Fig.4(a)

30

## Fig.4(b)

30

*Fig.5*

# Fig.6

# Fig.7